# EUROPÄISCHE PATENTSCHRIFT

(11) **EP 3 738 876 B1**
(45) Veröffentlichungstag und Bekanntmachung des Hinweises auf die Patenterteilung: **23.02.2022**
(21) Anmeldenummer: 20164539.7
(22) Anmeldetag: 20.03.2020
(51) Int. Cl.: B64C 39/02, B64C 17/10, B64C 3/40, B64C 13/16

(54) **MARSCHFLUGKÖRPER UND VERFAHREN ZUM STEUERN EINES MARSCHFLUGKÖRPERS**
CRUISE MISSILE AND METHOD FOR CONTROLLING SAME
MISSILE DE CROISIÈRE ET PROCÉDÉ DE COMMANDE D'UN MISSILE DE CROISIÈRE

(30) Priorität: 12.04.2019 DE 102019002705
(43) Veröffentlichungstag der Anmeldung: 18.11.2020
(73) Patentinhaber: MBDA Deutschland GmbH, 86529 Schrobenhausen (DE)
(72) Erfinder: Weberstetter, Christoph, 83435 Bad Reichenhall (DE)
(74) Vertreter: Isarpatent

(56) Entgegenhaltungen:
- DE-A1- 3 710 914
- GB-A- 651 436
- GB-A- 2 377 683
- US-B1- 8 350 200

## Beschreibung

Die vorliegende Erfindung betrifft einen Marschflugkörper und ein Verfahren zum Steuern, insbesondere zur aerodynamischen Flugsteuerung eines Marschflugkörpers.

Große unbemannte Flugkörper, sogenannte Marschflugkörper, können erhebliche Nutzlasten über weite Strecken transportieren und werden daher häufig zu Aufklärungszwecken oder für andere militärische oder zivile Aufgaben eingesetzt. Um die Nutzlasten über große Entfernungen transportieren zu können, führen Marschflugkörper typischerweise große Treibstoffmengen mit sich, die im Laufe einer Mission aufgebraucht werden. Somit ändert sich mit der Zeit die Gewichtsverteilung entlang einer Längsachse des Marschflugkörpers.

Für kleine, schultergestützte Raketen beschreibt die US 8 350 200 B1 einen aerodynamischen Druckpunkt in Richtung des Massenschwerpunkts der Rakete zu verschieben, indem eine Pfeilung von Canard-Wings oder von Steuerfinnen mittels eines Feder-Dämpfer-Mechanismus gesteuert wird, um eine hohe Agilität des Flugkörpers zu gewährleisten. Die US 6 923 404 B1 beschreibt einen unbemannten Flugkörper mit zwei in Bezug auf einen Umfang eines Rumpfs des Flugkörpers an entgegengesetzten Seiten angeordneten, elliptischen Schwenkflügeln, die zwischen einer mit einer Längsachse des Flugkörpers fluchtenden Stellung in eine Ausfahrstellung verschwenkbar sind. Ein Pfeilungswinkel der Schwenkflügel ist gemäß einem voreingestellten Steuerschema einstellbar, um den aerodynamischen Druckpunkt relativ zum Massenschwerpunkt zur Verbesserung der aerodynamischen Effizienz des Flugkörpers einzustellen.

Es ist Aufgabe der vorliegenden Erfindung, einen verbesserten Marschflugkörper und ein verbessertes Verfahren zum Steuern eines Marschflugkörpers bereitzustellen.

Diese Aufgabe wird jeweils durch einen Marschflugkörper mit den Merkmalen des Anspruchs 1 sowie durch ein Verfahren mit den Merkmalen des Anspruchs 5 gelöst.

Gemäß einem ersten Aspekt ist ein Marschflugkörper vorgesehen, mit einem eine Flugkörperlängsachse definierenden, beispielsweise zylindrischen Rumpfkörper, welcher einen Innenraum ausbildet, einem in dem Innenraum angeordneten Treibstofftank zur Aufnahme von Flüssigtreibstoff, einem an einem hinteren Ende des Rumpfkörpers angeordneten Triebwerk, einer Treibstoffpumpe zum Fördern von Flüssigtreibstoff aus dem Treibstofftank in das Triebwerk, zumindest zwei im Bereich des hinteren Endes des Rumpfkörpers angeordneten und radial von diesem abstehende Steuerfinnen, zumindest zwei radial von dem Rumpfkörper abstehenden Tragflügeln, welche in Bezug auf die Flugkörperlängsachse zwischen den Steuerfinnen und einem vorderen Ende des Rumpfkörpers angeordnet sind, einem kinematisch an die Tragflügel gekoppelten Aktuatorsystem zum Bewegen der Tragflügel relativ zu dem Rumpfkörper derart, dass ein Pfeilungswinkel der Tragflügel relativ zur Flugkörperlängsachse variierbar ist, und einer Steuerungsvorrichtung. Die Steuerungsvorrichtung ist dazu eingerichtet, Pumpensteuersignale zum Steuern einer Treibstoffförderrate der Treibstoffpumpe zu erzeugen bzw. bereitzustellen, anhand der Pumpensteuersignale eine sich im Treibstofftank befindliche aktuelle Treibstoffmasse zu ermitteln, anhand der ermittelten aktuellen Treibstoffmasse eine aktuelle Lage eines Massenschwerpunkts des Marschflugkörpers in Bezug auf die Flugkörperlängsachse zu bestimmen und Aktuatorstellsignale zum Betätigen des Aktuatorsystems zu erzeugen, um eine aktuelle Lage eines aerodynamischen Druckpunkts des Marschflugkörpers in Bezug auf die Flugkörperlängsachse abhängig von der aktuellen Lage des Massenschwerpunkts einzustellen.

Gemäß diesem Aspekt der Erfindung ist ein Flugkörper vorgesehen, bei welchem eine Pfeilung der Tragflügel abhängig vom Treibstoffverbrauch und der damit einhergehenden Änderung der Lage des Massenschwerpunkts mittels eines Aktuatorsystems, welches z.B. elektrische oder hydraulische Aktuatoren umfassen kann, einstellbar ist. Hierzu ist eine Steuerungsvorrichtung, z.B. in Form eines Mikrocontrollers oder allgemein eines Prozessors und eines Datenspeichers, vorgesehen, welche mit dem Aktuatorsystem und einer Treibstoffpumpe in Datenkommunikation steht bzw. zum Austausch elektrischer Signale verbunden ist. Die Treibstoffpumpe fördert flüssigen Treibstoff aus einem Tank des Marschflugkörpers in eine Brennkammer eines Triebwerks des Flugkörpers. Die durch die Pumpe geförderte Treibstoffmenge bzw. die Förderleistung oder Förderrate der Pumpe wird durch die Steuerungsvorrichtung eingestellt, z.B. basierend auf einem für eine jeweilige Mission vorgegebenen Steuerschema und/oder basierend auf Sensordaten, welche beispielsweise eine aktuelle Fluggeschwindigkeit, eine aktuelle Position oder ähnliche Flugdaten repräsentieren. Die von der Steuerungsvorrichtung vorgegebenen Pumpensteuerungssignale zum Steuern einer Treibstoffförderrate der Treibstoffpumpe werden verwendet, um eine Änderung der im Tank befindlichen aktuellen Treibstoffmasse und eine draus resultierende Änderung der Lage eines Massenschwerpunkts des Flugkörpers zu berechnen. Basierend auf der berechneten, aktuellen Lage des Massenschwerpunkts wird die Pfeilung der Tragflügel mittels der Aktuatoren eingestellt, indem die Steuerungsvorrichtung entsprechende Stellsignale zum Betätigen der Aktuatoren erzeugt. Aus dieser Änderung des Pfeilungswinkels resultiert eine Änderung des aerodynamischen Druckpunkts, also des Punkts, um welchen die aerodynamischen Stellflächen, insbesondere die Steuerfinnen, ein Moment erzeugen.

Gemäß einem weiteren Aspekt der Erfindung ist ein Verfahren zum Steuern eines Marschflugkörpers, insbesondere des Marschflugkörpers gemäß dem ersten Aspekt der Erfindung vorgesehen. Das Verfahren umfasst ein Erfassen einer Treibstoffförderrate einer Treibstoffpumpe, welche flüssigen Treibstoff aus einem Treibstofftank, der in einem durch einen Rumpfkörper des Marschflugkörpers begrenzten Innenraum angeordnet ist, zu einem an einem hinteren Ende des Rumpfkörpers angeordneten Triebwerk fördert, ein Ermitteln einer sich im Treibstofftank befindlichen aktuellen Treibstoffmasse anhand der erfassten Treibstoffförderrate, ein Bestimmen einer aktuellen Lage eines Massenschwerpunkts des Marschflugkörpers in Bezug auf eine durch den Rumpfkörper definierte Flugkörperlängsachse anhand der ermittelten aktuellen Treibstoffmasse, und ein Einstellen einer aktuelle Lage eines aerodynamischen Druckpunkts des Marschflugkörpers in Bezug auf die Flugkörperlängsachse abhängig von der aktuellen Lage des Massenschwerpunkts durch Einstellen eines Pfeilungswinkels von Tragflügeln des Marschflugkörpers mittels eines kinematisch an die Tragflügel gekoppelten Aktuatorsystems, wobei die Tragflügel radial von dem Rumpfkörper abstehen und in Bezug auf die Flugkörperlängsachse zwischen Steuerfinnen, die im Bereich des hinteren Endes des Rumpfkörpers angeordnet sind, und einem vorderen Ende des Rumpfkörpers angeordnet sind.

Die Schritte des Verfahrens gemäß diesem Aspekt der Erfindung können insbesondere durch eine Steuerungsvorrichtung in einem Flugkörper gemäß dem ersten Aspekt der Erfindung veranlasst bzw. durchgeführt werden.

Eine der Erfindung zugrundeliegende Idee besteht somit darin, eine Pfeilung bzw. einen Pfeilungswinkel der Tragflügel eines Marschflugkörpers abhängig vom Treibstoffverbrauch und der damit einhergehenden Änderung der Lage des Massenschwerpunkts mittels eines Aktuatorsystems einzustellen, wobei die Änderung der Lage des Massenschwerpunkts anhand von Steuersignalen ermittelt, die eine Steuerungsvorrichtung, z.B. ein sogenannter Flight-Controller, des Marschflugkörpers zur Steuerung einer Treibstoffpumpe bereitstellt. Beispielsweise kann die Pfeilung derart abhängig von der sich im Tank befindlichen aktuellen Treibstoffmasse gesteuert werden, dass ein Abstand entlang der Flugkörperlängsachse zwischen dem sich aus der Pfeilung ergebenden aerodynamischen Druckpunkt und einem aus der aktuellen Treibstoffmasse sich resultierender Massenschwerpunkt innerhalb eines vorbestimmten Abstandsbereichs liegt und vorzugsweise konstant ist, z.B. in einem Abstandsbereich der zwischen 0 und 0,5 Kaliber des Marschflugkörpers beträgt.

Durch die Verwendung der Pumpensteuersignale bzw. das Erfassen der Förderrate kann der tatsächliche Treibstoffverbrauch und eine daraus resultierende tatsächliche, aktuelle Lage des Massenschwerpunkts mit relativ hoher Genauigkeit, jedoch in effizienter Weise bestimmt werden. Damit wird eine relativ präzise Eingangsgröße für die Einstellung des Pfeilungswinkels und damit des aerodynamischen Druckpunktes bereitgestellt, wodurch die aerodynamische Flugsteuerung des Marschflugkörpers verbessert wird. Insbesondere kann ein Marschflugkörper auf diese Weise trotz seiner Größe relativ agil manövriert werden, da durch die treibstoffverbrauchsabhängige Einstellung der Pfeilung basierend auf der relativ präzisen Näherung des Massenschwerpunkts der Druckpunkt relativ nahe an den Massenschwerpunkt herangeführt und trotzdem eine stabile Fluglage beibehalten werden kann.

Vorteilhafte Ausgestaltungen und Weiterbildungen ergeben sich aus den auf die unabhängigen Ansprüche rückbezogenen Unteransprüchen in Verbindung mit der Beschreibung.

Gemäß einer Ausführungsform des Marschflugkörpers ist vorgesehen, dass eine Länge des Rumpfkörpers in einem Bereich zwischen 2 m und 4 m liegt, insbesondere zwischen 2,8 m und 3,2 m, und wobei ein Durchmesser des Rumpfkörpers in einem Bereich zwischen 0,2 m und 0,5 m, insbesondere zwischen 0,25 m und 0,4 m liegt. Es hat sich gezeigt, dass in diesen Größenbereichen des Marschflugkörpers eine besonders präzise Einstellung des Druckpunkts erfordern, um eine hohe Agilität des Flugkörpers bei gewünschter Flugstabilität zu erzielen.

Gemäß einer weiteren Ausführungsform weist der Treibstofftank ein Volumen in einem Bereich zwischen 40 Liter und 110 Liter auf. Damit können etwa 40 bis 80 kg Flüssigtreibstoff, wie z.B. Kerosin, im Tank aufgenommen werden. Insbesondere aufgrund der im Verhältnis zum Gesamtgewicht des Flugkörpers, z.B. bis zu 1.000 kg, relativ geringen Treibstoffmasse ist eine präzise Einstellung des Druckpunkts erforderlich, um eine hohe Agilität des Flugkörpers bei gewünschter Flugstabilität. Dies lässt sich mit der erfindungsgemäßen Steuerung der Pfeilung überraschend gut realisieren.

Gemäß einer Ausführungsform des Marschflugkörpers ist vorgesehen, dass die Tragflügel bei minimalem Pfeilungswinkel eine Spannweite, gemessen senkrecht zur Flugkörperlängsachse, in einem Bereich zwischen 1,8 m und 3 m, insbesondere von etwa 2 m aufweisen. Durch diese relativ große Spannweite führen bereits kleine Änderungen des Pfeilungswinkels vorteilhaft zu einer relativ großen Veränderung der Lage des aerodynamischen Druckpunkts. Durch die präzise Bestimmung des Massenschwerpunkts basierend auf der aus der Treibstoffförderrate ermittelten aktuellen Treibstoffmasse kann der Druckpunkt somit durch kleine Aktuationsbewegungen schnell und in effizienter Weise eingestellt werden.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Ansicht eines Marschflugkörpers gemäß einem Ausführungsbeispiel der vorliegenden Erfindung mit vollem Treibstofftank;
- Fig. 2: den in Fig. 1 dargestellten Marschflugkörper nach einer bestimmten Flugstrecke, wenn gegenüber Fig. 1 verringerter sich im Treibstofftank befindlicher Treibstoffmasse; und
- Fig. 3: ein Flussdiagram der Schritte eines Verfahrens gemäß einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

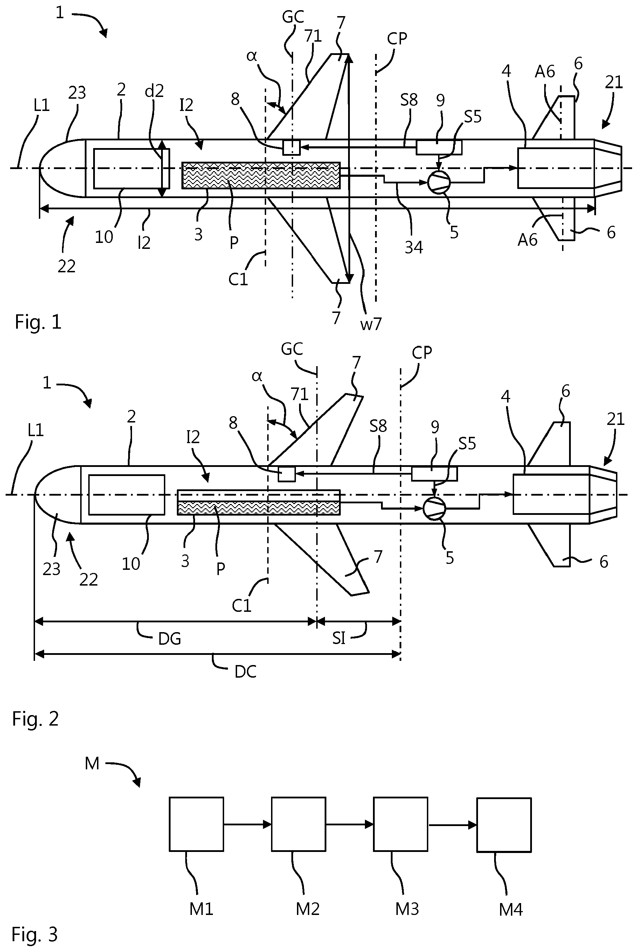

Fig. 1 zeigt beispielhaft einen Flugkörper in Form eines Marschflugkörpers 1 mit einem Rumpfkörper 2, einem Treibstofftank 3, einem Triebwerk 4, einer Treibstoffpumpe 5, Steuerfinnen 6, Tragflügeln 7, einem Aktuatorsystem 8 und einer Steuerungsvorrichtung 9. Der in Fig. 1 beispielhaft dargestellte Marschflugkörper 1 weist ferner eine optionale Nutzlast 10, z.B. in Form einer Sprengladung oder in Form von Überwachungsausrüstung auf.

Wie in Fig. 1 schematisch dargestellt ist, definiert der Rumpfkörper 2 eine Flugkörperlängsachse L1 und bildet einen Innenraum des Flugkörpers 1 aus. Insbesondere kann der Rumpfkörper 2 einen zylinderförmigen Querschnitt aufweisen und erstreckt sich zwischen einem hinteren Ende 21 und einem vorderen Ende 22. Wie Fig. 1 beispielhaft dargestellt ist, kann an dem vorderen Ende 22 des Rumpfkörpers 2 eine Rumpfspitze bzw. ein Rumpfdom 23 angebracht sein, der beispielsweise als Suchkopf ausgebildet sein kann und/oder Navigationseinrichtungen, wie z.B. GPS-Sensoren, IMUs oder dergleichen, aufweist. Eine Länge I2 des Rumpfkörpers 2, kann insbesondere zwischen dem Ende des Rumpfdoms 23 und dem hinteren Ende 21 des Rumpfkörpers 2 gemessen werden. Die Länge I2 liegt optional in einem Bereich zwischen 2 m und 4 m. Ein Durchmesser d2 des Rumpfkörpers 2, insbesondere ein maximaler Durchmesser kann beispielsweise in einem Bereich zwischen 0,2 m und 0,5 m liegen. Der Rumpfkörper 2 kann insbesondere aus Metallmaterial, wie z.B. einer Aluminiumlegierung oder einem Faserverbundmaterial hergestellt sein.

Im Bereich des hinteren Endes 21 des Rumpfkörpers 2 sind zumindest zwei Steuerfinnen 6 angeordnet, welche radial, also quer zur Flugkörperlängsachse L1 von dem Rumpfkörper 2 abstehen, wie dies in Fig. 1 beispielhaft gezeigt ist. Die Steuerfinnen 6 können insbesondere jeweils um eine senkrecht auf die Flugkörperlängsachse L1 stehende Steuerachse A6 drehbar sein, um eine Änderung eines Anstellwinkels, eines Rollwinkels und/oder eines Gierwinkels des Flugkörpers 1 zu bewirken. Zur Drehung der Steuerfinnen 6 um die Steuerachse A6 können ein oder mehrere Aktuatoren (nicht dargestellt), z.B. hydraulische oder elektrische Aktuatoren vorgesehen sein.

Wie in Fig. 1 weiterhin dargestellt ist, sind zumindest zwei zwei radial von dem Rumpfkörper 2 abstehenden Tragflügel 7 vorgesehen. Die Tragflügel 7 sind in Bezug auf die Flugkörperlängsachse L1 zwischen den Steuerfinnen 6 und dem vorderen Ende 22 des Rumpfkörpers 2 angeordnet. Insbesondere kann vorgesehen sein, dass genau zwei Tragflügel 7 vorgesehen sind, die in Bezug auf den Umfang des Rumpfkörpers 2 entgegengesetzt zueinander in einer Ebene angeordnet sind. Die Tragflügel 7 sind als aerodynamischen Auftrieb erzeugende Profile ausgebildet und dienen dazu, den Marschflugkörper 1 während eines Flugs in der Luft zu halten.

Die Tragflügel 7 sind jeweils derart drehbar gelagert, dass ein Pfeilungswinkel α, der sich zwischen dem jeweiligen Tragflügel 7 und einer senkrecht auf die Flugkörperlängsachse L1 stehenden Flugkörperquerachse C1 ergibt, variierbar ist. In den Fign. 1 und 2 ist der Pfeilungswinkel α beispielhaft als der Winkel zwischen der Flugkörperquerachse C1 und einer dem vorderen Ende 22 des Rumpfkörpers 2 zugewandten Vorderkante 71 des jeweiligen Tragflügels 7 eingezeichnet. In Fig. 1 sind die Tragflügel 7 in einer Position minimalen Pfeilungswinkels α dargestellt. Bei minimalem Pfeilungswinkel α können die Tragflügel 7 beispielsweise eine Spannweite w7 in einem Bereich zwischen 1,8 m und 3 m aufweisen. Fig. 2 zeigt die Tragflügel 7 in einer gegenüber der in Fig. 1 gezeigten Stellung verschwenkten Stellung, wobei der Pfeilungswinkel α vergrößert wurde.

Das Aktuatorsystem 8 ist in Fig. 1 lediglich symbolisch als Block im Innenraum I2 des Rumpfkörpers 2 dargestellt. Das Aktuatorsystem 8 kann einen oder mehrere Aktuatoren, beispielsweise einen Aktuator je Tragflügel 7 aufweisen. Insbesondere können hydraulische oder elektrische Aktuatoren, z.B. in Form von Stellmotoren vorgesehen sein. Die Aktuatoren des Aktuatorsystems 8 sind kinematisch, z.B. über ein Stangengetriebe oder dergleichen, an die Tragflügel 7 gekoppelt, um die Tragflügel 7 relativ zu dem Rumpfkörper zur Variation des Pfeilungswinkels α zu bewegen.

Die optionale Nutzlast 10 kann insbesondere im Bereich des vorderen Endes 22 des Rumpfkörpers 2 im Innenraum I2 des Rumpfkörpers 2 angeordnet sein, wie dies in Fig. 1 beispielhaft dargestellt ist.

Der Treibstofftank 3 ist ebenfalls im Innenraum I2 des Rumpfkörpers 2 angeordnet, z.B. in etwa mittig zwischen dem vorderen und dem hinteren Ende 22, 21, wie dies in Fig. 1 schematisch und beispielhaft gezeigt ist. Der Treibstofftank 3 dient zur Aufnahme von Flüssigtreibstoff P, wie z.B. Kerosin oder anderen bekannten Flüssigtreibstoffen. Der Tank 3 kann beispielsweise ein Volumen in einem Bereich zwischen 40 Liter und 110 Liter aufweisen. In Fig. 1 ist der Tank 3 beispielhaft in einem Zustand dargestellt, in dem dieser vollständig mit Treibstoff P gefüllt ist.

Das Triebwerk 4 ist, wie in Fig. 1 schematisch dargestellt, einem an einem hinteren Ende 21 des Rumpfkörpers 2 angeordnet und dient dem Antrieb des Marschflugkörpers 1. Das Triebwerk 4 kann insbesondere als Strahltriebwerk realisiert sein.

Die Treibstoffpumpe 5 ist in einem hydraulischen Pfad 34 angeordnet, welcher den Treibstofftank 3 und das Triebwerk 4, insbesondere eine Brennkammer des Triebwerks 4, fluidisch leitend miteinander verbindet. Die Treibstoffpumpe 5 ist dazu eingerichtet, den im Treibstofftank 3 lagernden Flüssigtreibstoff P mit einer vorbestimmten Förderrate in die Brennkammer des Triebwerks 4 zu transportieren. Mit der Treibstoffpumpe 5 ist dem Triebwerk 4 somit eine bestimmte Brennstoffmasse pro Zeit zuführbar.

Die Steuerungsvorrichtung 9 ist in Fig. 1 lediglich symbolisch als Block im Innenraum I2 des Rumpfkörpers 2 dargestellt und kann insbesondere einen Prozessor, z.B. in Form einer CPU, eines FPGA oder eine ASIC, und einen durch den Prozessor lesbaren, nicht-flüchtigen Datenspeicher, z.B. in Form eines Flash-Speichers, einer Festplatte, einer DVD, einer Blu-Ray ^{®} oder dergleichen, aufweisen. Die Steuerungsvorrichtung 9 ist, wie dies in Fig. 1 schematisch dargestellt ist, mit der Treibstoffförderpumpe 5 und mit dem Aktuatorsystem 8 verbunden, insbesondere zum Datenaustausch. Beispielsweise kann die Steuerungsvorrichtung 9 entsprechende Schnittstellen, z.B. in Form von Bus-Schnittstellen oder dergleichen aufweisen. Die Steuerungsvorrichtung 9 ist dazu eingerichtet elektrische Signale zum Steuern bzw. Betätigen verschiedener Aktuatoren oder Steuerkomponenten des Flugkörpers 1 eingerichtet, insbesondere zum Erzeugen von Pumpensteuersignalen S5 zum Steuern einer Treibstoffförderrate der Treibstoffpumpe 5 und zum Erzeugen von Aktuatorstellsignale S8 zum Betätigen des Aktuatorsystems 8. Die Steuerungsvorrichtung 8 kann insbesondere durch einen Flight-Controller des Marschflugkörpers 1 gebildet sein, der dazu vorgesehen ist, durch entsprechende Aktuation insbesondere von Triebwerk 4 und Steuerfinnen 6 den Marschflugkörper 1 entlang einer vorbestimmten Trajektorie zu navigieren. Hierzu kann die Steuerungsvorrichtung 9 weiterhin Positionsdaten von Positionssensoren (nicht dargestellt), Fluggeschwindigkeitsdaten von Geschwindigkeitssensoren (nicht dargestellt) und weitere Flugdaten erhalten.

Fig. 3 zeigt schematisch ein Flussdiagramm eines Verfahrens M zur aerodynamischen Steuerung eines Marschflugkörpers 1, welches nachfolgend beispielhaft unter Bezugnahme auf den anhand der Fign. 1 und 2 beschriebenen Marschflugkörper 1 erläutert wird.

In einem ersten Schritt M1 erfolgt ein Erfassen der Treibstoffförderrate der Treibstoffpumpe 5. Dies kann insbesondere durch Auswerten der Pumpensteuersignale S5 durch die Steuerungsvorrichtung 9 erfolgen. Die Steuerungsvorrichtung 9 ermittelt in Schritt M2 anhand der Pumpensteuersignale S5 eine sich im Treibstofftank 3 befindliche aktuelle Treibstoffmasse. Beispielsweise kann in dem Datenspeicher der Steuerungsvorrichtung 9 eine zu Beginn einer Mission sich im Treibstofftank 3 befindliche Startmasse hinterlegt sein. Die Treibstoffförderrate der Treibstoffpumpe 5, die durch die Pumpensteuersignale S5 repräsentiert wird, kann über die Zeit integriert werden, um die bereits verbrauchte Treibstoffmasse zu ermitteln. Die aktuelle Treibstoffmasse kann die Steuerungsvorrichtung 9 folglich durch Subtraktion der verbrauchten Treibstoffmasse von der Startmasse ermitteln.

In Fig. 1 ist der Treibstofftank 3 mit einer Startmasse an Treibstoff P gefüllt dargestellt. In dieser Konstellation ergibt sich eine Startlage des Massenschwerpunkts GC des Marschflugkörpers GC in Bezug auf die Flugkörperlängsachse L1 wie sie in Fig. 1 durch eine Doppelstrichpunktlinie dargestellt ist. Der Massenschwerpunkts GC liegt in Bezug auf die Flugkörperlängsachse L1 hierbei im Bereich der Tragflügel 7. Aus der aktuellen Fluggeschwindigkeit des Marschflugkörpers 1 und dem aktuellen Pfeilungswinkel α der Tragflügel 7 ergibt sich ein aerodynamischer Druckpunkt CP, der in Fig. 1 in Bezug auf die Flugkörperlängsachse L1 zwischen dem sich ergebenden Massenschwerpunkt GC und den Steuerfinnen 6 liegt.

Die aktuelle Lage des Massenschwerpunkts GC wird in Schritt M3 anhand der ermittelten aktuellen Treibstoffmasse durch die Steuerungsvorrichtung 3 bestimmt. Beispielsweise kann der Treibstofftanks 3 als Punktmasse angenommen werden und dessen Lage in Bezug auf die Flugkörperlängsachse L1 im Datenspeicher der Steuerungsvorrichtung 9 hinterlegt sein. Die übrigen Komponenten des Flugkörpers 1 können ebenfalls als Punktmassen angenommen und deren Lage in Bezug auf die Flugkörperlängsachse L1 im Datenspeicher der Steuerungsvorrichtung 9 hinterlegt sein, so dass die Steuerungsvorrichtung 9 aus einer Gleichung für das Momentengleichgewicht die aktuelle Lage des Massenschwerpunkts GC bestimmen kann. In Fig. 2 ist die Lage des Massenschwerpunkts GC durch eine Doppelstrichpunktlinie dargestellt, die in einem Abstand DG zu einer vordersten Spitze des Flugkörpers 1, die in Fig. 2 durch den optionalen Rumpfdom 23 gebildet ist, liegt. Wie in Fig. 2 erkennbar ist, ist die aktuelle Treibstoffmasse, also die Masse an Treibstoff P, die noch im Tank 3 vorhanden ist, im Vergleich zur in Fig. 1 dargestellten Startmasse verringert. Der Massenschwerpunkt GC ist deshalb in Richtung des hinteren Endes 21 des Rumpfkörpers 2 verschoben.

Um die aktuelle Lage eines aerodynamischen Druckpunkts CP des Marschflugkörpers 1 in Bezug auf die Flugkörperlängsachse L1 abhängig von der aktuellen Lage des Massenschwerpunkts GC einzustellen, erzeugt die Steuerungsvorrichtung 9 in Schritt M4 Aktuatorstellsignale S8 zum Betätigen des Aktuatorsystems 8, welches den Pfeilungswinkels α der Tragflügeln 7 ändert. Wie in Fig. 2 erkennbar, wurde der Pfeilungswinkel α im Vergleich zu Fig. 1 vergrößert. Dadurch wurde die Lage des Druckpunkts CP, welche in Fig. 2 durch eine gestrichelte Linie dargestellt ist, im Vergleich zu Fig. 1 in Richtung des hinteren Endes 21 des Rumpfkörpers 2 verschoben. Die Lage des Druckpunkts CP kann durch einen Abstand DP zu der vordersten Spitze des Flugkörpers 1, die in Fig. 2 durch den optionalen Rumpfdom 23 gebildet ist, definiert sein. Als Maß SI für die aerodynamische Stabilität des Flugkörpers 1 kann eine Differenz zwischen der Lage DP des Druckpunkts CP und der Lage DG des Massenschwerpunkts CG definiert sein, wobei für einen stabilen Flug die Differenz einen Wert größer Null annehmen sollte. In diesem Fall liegt der Druckpunkt CP weiter von der Spitze des Flugkörpers 1 entfernt als der Massenschwerpunkt CG. Je kleiner die Differenz SI wird, desto agiler kann der Flugkörper 1 manövriert werden. Beispielsweise kann die Steuerungsvorrichtung 9 den Pfeilungswinkel α derart abhängig von der Lage DG des Massenschwerpunkts CG steuern, dass die Differenz SI zwischen der Lage DP des Druckpunkts CP und der Lage DG des Massenschwerpunkts CG konstant ist.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Marschflugkörper
- 2: Rumpfkörper
- 3: Treibstofftank
- 4: Triebwerk
- 5: Treibstoffpumpe
- 6: Steuerfinnen
- 7: Tragflügel
- 8: Aktuatorsystem

- 21: hinteres Ende des Rumpfkörpers
- 22: vorderes Ende des Rumpfkörpers
- 23: Rumpfdom
- 34: hydraulischer Pfad
- 71: Vorderkante der Tragflügel

- CP: Druckpunkt
- d2: Durchmesser des Rumpfkörpers
- DG: Lage des Massenschwerpunkts
- DP: Lage des Druckpunkts
- GC: Massenschwerpunkt
- I2: Innenraum
- L1: Flugkörperlängsachse
- I2: Länge des Rumpfkörpers
- P: Flüssigtreibstoff
- S5: Pumpensteuersignale
- S8: Betätigungssignale
- SI: Differenz
- w7: Spannweite

- α: Pfeilungswinkel

## Patentansprüche

1. Marschflugkörper (1), mit:
einem eine Flugkörperlängsachse (L1) definierenden Rumpfkörper (2),
welcher einen Innenraum (I2) ausbildet;
einem in dem Innenraum (I2) angeordneten Treibstofftank (3) zur Aufnahme von Flüssigtreibstoff (P);
einem an einem hinteren Ende (21) des Rumpfkörpers (2) angeordneten Triebwerk (4);
einer Treibstoffpumpe (5) zum Fördern von Flüssigtreibstoff (P) aus dem Treibstofftank (3) in das Triebwerk (4);
zumindest zwei im Bereich des hinteren Endes (21) des Rumpfkörpers (2) angeordneten und radial von diesem abstehenden Steuerfinnen (6);
zumindest zwei radial von dem Rumpfkörper (2) abstehenden Tragflügeln (7), welche in Bezug auf die Flugkörperlängsachse (L1) zwischen den Steuerfinnen (6) und einem vorderen Ende (22) des Rumpfkörpers (2) angeordnet sind;
einem kinematisch an die Tragflügel (7) gekoppelten Aktuatorsystem (8) zum Bewegen der Tragflügel (7) relativ zu dem Rumpfkörper (2) derart, dass ein Pfeilungswinkel (a) der Tragflügel (7) relativ zur Flugkörperlängsachse (L1) variierbar ist; und
einer Steuerungsvorrichtung (9), welche dazu eingerichtet ist:
- Pumpensteuersignale (S5) zum Steuern einer Treibstoffförderrate der Treibstoffpumpe (5) bereitzustellen,
- anhand der Pumpensteuersignale (S5) eine sich im Treibstofftank (3) befindliche aktuelle Treibstoffmasse zu ermitteln,
- anhand der ermittelten aktuellen Treibstoffmasse eine aktuellen Lage eines Massenschwerpunkts (GC) des Marschflugkörpers (1) in Bezug auf die Flugkörperlängsachse (L1) zu bestimmen und
- Aktuatorstellsignale (S8) zum Betätigen des Aktuatorsystems (8) zu erzeugen, um eine aktuelle Lage eines aerodynamischen Druckpunkts (CP) des Marschflugkörpers (1) in Bezug auf die Flugkörperlängsachse (L1) abhängig von der aktuellen Lage des Massenschwerpunkts (GC) einzustellen.

2. Marschflugkörper (1) nach Anspruch 1, wobei eine Länge (I2) des Rumpfkörpers (2) in einem Bereich zwischen 2 m und 4 m liegt, und wobei ein Durchmesser (d2) des Rumpfkörpers (2) in einem Bereich zwischen 0,2 m und 0,5 m liegt.

3. Marschflugkörper (1) nach Anspruch 1 oder 2, wobei der Treibstofftank (3) ein Volumen in einem Bereich zwischen 40 Liter und 110 Liter aufweist.

4. Marschflugkörper (1) nach einem der voranstehenden Ansprüche, wobei die Tragflügel (7) bei minimalem Pfeilungswinkel (a) eine Spannweite (w7) in einem Bereich zwischen 1,8 m und 3 m aufweisen.

5. Verfahren (M) zum Steuern eines Marschflugkörpers (1) mit folgenden Schritten:
Erfassen (M1) einer Treibstoffförderrate einer Treibstoffpumpe (5), welche flüssigen Treibstoff aus einem Treibstofftank (3), der in einem durch einen Rumpfkörper (2) des Marschflugkörpers (1) begrenzten Innenraum (I2) angeordnet ist, zu einem an einem hinteren Ende (21) des Rumpfkörpers (2) angeordneten Triebwerk (4) fördert;
Ermitteln (M2) einer sich im Treibstofftank (3) befindlichen aktuellen Treibstoffmasse anhand der erfassten Treibstoffförderrate;
Bestimmen (M3) einer aktuellen Lage eines Massenschwerpunkts (GC) des Marschflugkörpers (1) in Bezug auf eine durch den Rumpfkörper (2) definierte Flugkörperlängsachse (L1) anhand der ermittelten aktuellen Treibstoffmasse; und
Einstellen (M4) einer aktuellen Lage eines aerodynamischen Druckpunkts (CP) des Marschflugkörpers (1) in Bezug auf die Flugkörperlängsachse (L1) abhängig von der aktuellen Lage des Massenschwerpunkts (GC) durch Einstellen eines Pfeilungswinkels (a) von Tragflügeln (7) des Marschflugkörpers (1) mittels eines kinematisch an die Tragflügel (7) gekoppelten Aktuatorsystems (8), wobei die Tragflügel (7) radial von dem Rumpfkörper (2) abstehen und in Bezug auf die Flugkörperlängsachse (L1) zwischen Steuerfinnen (6), die im Bereich des hinteren Endes (21) des Rumpfkörpers (2) angeordnet sind, und einem vorderen Ende (22) des Rumpfkörpers (2) angeordnet sind.

## Claims

1. Cruise missile (1), comprising:
a fuselage (2) which defines a longitudinal missile axis (L1) and forms an interior (12);
a fuel tank (3), arranged in the interior (12), for receiving liquid fuel (P);
an engine (4) arranged at a rear end (21) of the fuselage (2) ;
a fuel pump (5) for conveying liquid fuel (P) from the fuel tank (3) into the engine (4);
at least two control fins (6), arranged in the region of the rear end (21) of the fuselage (2) and radially spaced apart therefrom;
at least two aerofoils (7), radially spaced apart from the fuselage (2) and arranged between the control fins (6) and
a front end (22) of the fuselage (2) in terms of the longitudinal projectile axis (L1);
an actuator system (8), kinematically coupled to the aerofoils (7), for moving the aerofoils (7) relative to the fuselage (2) in such a way that a sweep angle (α) of the aerofoils (7) relative to the longitudinal projectile axis (L1) is variable; and
a control device (9) which is set up:
- to provide pump control signals (S5) for controlling a fuel conveyance rate of the fuel pump (5),
- to determine a current fuel mass present in the fuel tank (3) from the pump control signals (S5),
- to determine a current position of a centre of mass (GC) of the cruise missile (1) in terms of the longitudinal projectile axis (L1) from the determined current fuel mass; and
- to generate actuator control signals (S8) for actuating the actuator system (8), so as to set a current position of an aerodynamic pressure point (CP) of the cruise missile (1) in terms of the longitudinal missile axis (L1) as a function of the current position of the centre of mass (GC).

2. Cruise missile (1) according to claim 1, wherein a length (12) of the fuselage (2) is in a range between 2 m and 4 m and wherein a diameter (d2) of the fuselage (2) is in a range between 0.2 m and 0.5 m.

3. Cruise missile (1) according to either claim 1 or claim 2, wherein the fuel tank (3) has a volume in a range between 40 litres and 110 litres.

4. Cruise missile (1) according to any of the preceding claims, wherein the aerofoils (7) have a span (w7) in a range between 1.8 m and 3 m at a minimum sweep angle (α).

5. Method (M) for controlling a cruise missile (1), having the following steps:
detecting (M1) a fuel conveyance rate of a fuel pump (5), which conveys liquid fuel from a fuel tank (3), arranged in an interior (12) delimited by a fuselage (2) of the cruise missile (1), to an engine (4), arranged at a rear end (21) of the fuselage (2);
determining (M2) a current fuel mass located in the fuel tank (3) from the detected fuel conveyance rate;
determining (M3) a current position of a centre of mass (GC) of the cruise missile (1) in terms of a longitudinal missile axis (L1) defined by the fuselage (2) from the determined current fuel mass; and
setting (M4) a current position of an aerodynamic pressure point (CP) of the cruise missile (1) in terms of the longitudinal missile axis (L1) as a function of the current position of the centre of mass (GC), by setting a sweep angle (α) of aerofoils (7) of the cruise missile (1) using an actuator system (8) kinematically coupled to the aerofoils (7), the aerofoils (7) protruding radially from the fuselage (2) and being arranged between control fins (6), arranged in the region of the rear end (21) of the fuselage (2), and a front end (22) of the fuselage (2) in terms of the longitudinal projectile axis (L1).

## Revendications

1. Missile de croisière (1), comportant :
un corps de fuselage (2) qui définit un axe longitudinal de missile (L1) et forme un espace intérieur (I2) ;
un réservoir de carburant (3) disposé dans l'espace intérieur (I2) pour recevoir du carburant liquide (P) ;
un moteur (4) disposé à une extrémité arrière (21) du corps de fuselage (2) ;
une pompe à carburant (5) pour délivrer du carburant liquide (P) du réservoir de carburant (3) au moteur (4) ;
au moins deux ailerons de commande (6) disposées dans la zone de l'extrémité arrière (21) du corps de fuselage (2) et faisant saillie radialement de celui-ci ;
au moins deux ailes (7) faisant saillie radialement du corps de fuselage (2) et disposées entre les ailerons de commande (6) et une extrémité avant (22) du corps de fuselage (2) par rapport à l'axe longitudinal de missile (L1);
un système actionneur (8) couplé cinématiquement aux ailes (7) pour déplacer les ailes (7) par rapport au corps de fuselage (2) de telle sorte qu'un angle de flèche (a) des ailes (7) par rapport à l'axe longitudinal de missile (L1) soit variable ; et
un dispositif de commande (9), lequel est conçu pour :
- fournir des signaux de commande de pompe (S5) pour commander un débit de refoulement de carburant de la pompe à carburant (5),
- déterminer une masse actuelle de carburant dans le réservoir de carburant (3) à partir des signaux de commande de pompe (S5),
- déterminer une position actuelle d'un centre de masse (GC) du missile de croisière (1) par rapport à l'axe longitudinal de missile (L1) à partir de la masse actuelle de carburant déterminée et
- générer des signaux de réglage d'actionneur (S8) pour actionner le système actionneur (8) afin de régler une position actuelle d'un point de pression aérodynamique (CP) du missile de croisière (1) par rapport à l'axe longitudinal de missile (L1) en fonction de la position actuelle du centre de masse (GC).

2. Missile de croisière (1) selon la revendication 1, dans lequel une longueur (l2) du corps de fuselage (2) se situe dans une plage comprise entre 2 m et 4 m, et dans lequel un diamètre (d2) du corps de fuselage (2) se situe dans une plage comprise entre 0,2 m et 0,5 m.

3. Missile de croisière (1) selon la revendication 1 ou 2, dans lequel le réservoir de carburant (3) présente un volume dans une plage comprise entre 40 litres et 110 litres.

4. Missile de croisière (1) selon l'une des revendications précédentes, dans lequel les ailes (7) présentent une envergure (w7) dans une plage comprise entre 1,8 m et 3 m à un angle de flèche (a) minimal.

5. Procédé (M) pour commander un missile de croisière (1), présentant les étapes consistant à :
détecter (M1) un débit de refoulement de carburant d'une pompe à carburant (5) qui refoule du carburant liquide depuis un réservoir de carburant (3), qui est disposé dans un espace intérieur (I2) délimité par un corps de fuselage (2) du missile de croisière (1), vers un moteur (4) disposé à une extrémité arrière (21) du corps de fuselage (2) ;
déterminer (M2) une masse actuelle de carburant dans le réservoir de carburant (3) à partir du débit de refoulement de carburant détecté ;
déterminer (M3) une position actuelle d'un centre de masse (GC) du missile de croisière (1) par rapport à un axe longitudinal de missile (L1) défini par le corps de fuselage (2) à partir de la masse actuelle de carburant déterminée ; et
régler (M4) une position actuelle d'un point de pression aérodynamique (CP) du missile de croisière (1) par rapport à l'axe longitudinal de missile (L1) en fonction de la position actuelle du centre de masse (GC) en réglant un angle de flèche (a) des ailes (7) du missile de croisière (1) au moyen d'un système actionneur (8) couplé cinématiquement aux ailes (7), dans lequel les ailes (7) font saillie radialement du corps de fuselage (2) et sont disposées, par rapport à l'axe longitudinal de missile (LI), entre des ailerons de commande (6), qui sont disposées dans la zone de l'extrémité arrière (21) du corps de fuselage (2), et une extrémité avant (22) du corps de fuselage (2).
